Europäisches Patentamt

European Patent Office

Office européen des brevets

(11) Veröffentlichungsnummer: **0 254 824**
**A2**

(19)

(12) **EUROPÄISCHE PATENTANMELDUNG**

(21) Anmeldenummer: 87106689.0

(22) Anmeldetag: 08.05.87

(51) Int. Cl.4: **G06F 15/332**

(30) Priorität: 30.07.86 DE 3625737

(43) Veröffentlichungstag der Anmeldung:
03.02.88 Patentblatt 88/05

(84) Benannte Vertragsstaaten:
**DE FR GB NL**

(71) Anmelder: **ROBERT BOSCH GMBH**
**Postfach 50**
**D-7000 Stuttgart 1(DE)**

(72) Erfinder: **Gärtner, Siegfried, Dipl.-Ing.**
**Eulerstrasse 9**
**D-1000 Berlin 65(DE)**
Erfinder: **Neuner, Hermann, Dipl.-Ing.**
**Templerzeile 3**
**D-1000 Berlin 42(DE)**

(74) Vertreter: **Schmidt, Hans-Ekhardt**
**Robert Bosch GmbH Geschäftsbereich**
**Elektronik Patent- und Lizenzabteilung**
**Forckenbeckstrasse 9-13**
**D-1000 Berlin 33(DE)**

(54) Verfahren zur zweidimensionalen diskreten Cosinus-Transformation.

(57) Es wird ein Verfahren zur zweidimensionalen diskreten Cosinus-Transformation vorgeschlagen, die an einer Folge von Blöcken aus acht mal acht binären Daten mit je n bit ausgeführt wird. Um zu einer möglichst kurzen Dauer der Transformation zu gelangen, werden die zu transformierenden Eingangswerte in zwei aufeinanderfolgenden Transformatoren (TR1, TR2) eindimensional bearbeitet. Zwischen beiden Transformatoren befindet sich ein Blockzwischenspeicher (BZS) mit zwei Zwischenspeichern (ZS1, ZS2), die die in dem ersten Transformator gebildeten Zwischensummen ($y'_{1,1}$ bis $y'_{8,8}$) zeilenorientiert und blockweise abwechselnd speichern. In den Transformatoren (TR1, TR2) findet eine Multiplikation von jeweils acht Eingangsdaten der acht mal acht Eingangsdaten umfassenden Blöcke statt, wobei Faktoren zur Anwendung kommen, die sich aus einer Transformationsmatrize (A) ergeben. Im Anschluß an die Multiplikation findet eine paarweise Addition statt, und zwar solange, bis jeweils nur eine Zwischensumme ($y'_{1,1}$) bzw. eine Gesamtsumme ($y_{1,1}$) vorliegt, die auf n bit gerundet wird.

Xerox Copy Centre

EP 0 254 824 A2

## Verfahren zur zweidimensionalen diskreten Cosinus-Transformation

Stand der Technik

Die Erfindung geht von einem Verfahren nach der Gattung des Hauptanspruchs aus.

Es ist bekannt (Richard E. Blahut, Fast Algorithmus for Digital Signal Processing, Addison-Wesley Publishing Company, Amsterdam 1984), eine zweidimensionale Cosinus-Transformation an Hand von Rechner-Algorithmen durchzuführen. Der Rechenvorgang benötigt jedoch auch bei den heutigen Schnellrechnern eine bestimmte Zeit, die nicht unterschritten werden kann.

Vorteile der Erfindung

Das erfindungsgemäße Verfahren mit den kennzeichnenden Merkmalen des Hauptanspruchs hat den Vorteil, daß die Rechenoperationen derart gegliedert werden, daß die diskrete Cosinus-Transformation in kürzester Zeit erfolgt. Durch die in den Unteransprüchen aufgeführten Maßnahmen lassen sich Schaltungsanordnungen zur Durchführung des in dem Hauptanspruch angegebenen Verfahrens in vorteilhafter Weise realisieren. Besonders vorteilhaft ist eine Schaltungsanordnung, bei der für die Durchführung der Rechenvorgänge mehrere miteinander verbundene integrierte Logikschaltungen vorgesehen sind. Dadurch lassen sich der wirtschaftliche und technische Aufwand für die Realisierung der Schaltungsanordnung besonders gering halten.

Zeichnung

Ein Ausführungsbeispiel der Erfindung ist in der Zeichnung an Hand einer einzigen Figur dargestellt. Die Zeichnung zeigt ein Blockschaltbild einer zweistufigen Transformationsschaltung zur diskreten Cosinus-Transformation.

Beschreibung der Erfindung

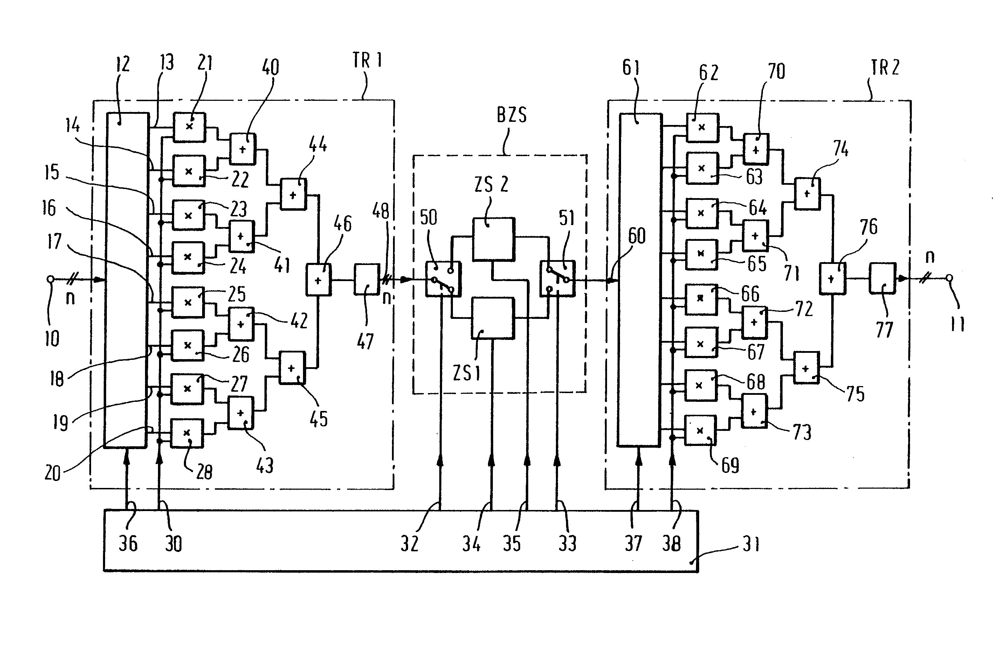

In der Figur bezeichnet 10 einen Eingang und 11 einen Ausgang einer Schaltungsanordnung zur zweidimensionalen diskreten Cosinus-Transformation. Zwischen dem Eingang 10 und dem Ausgang 11 liegt ein erster eindimensionaler Transformator TR1 in Serie mit einem Blockzwischenspeicher BZS und einem zweiten eindimensionalen Transformator TR2. Es sei vorausgeschickt, daß alle in der Fig. 1 gezeigten Leitungsverbindungen Leitungsbündel sind.

Der erste Transformator TR1 weist einen mit dem Eingang 10 verbundenen Serien-Parallelwandler 12 mit acht Ausgängen 13 bis 20 auf. Jeder Ausgang ist mit einem ersten Eingang je eines Multiplizierers 21 bis 28 verbunden. Die zweiten Eingänge der Multiplizierer führen gemeinsam an einen Ausgang 30 einer elektronischen Speicher-und Steuerungsschaltung 31. Die Ausgänge von je zwei benachbarten Multiplizierern 21, 22; 23, 24; 25, 26; 27, 28 sind mit den beiden Eingängen je eines ersten bis vierten Addierers 40 bis 43 verbunden. Die Ausgänge von je zwei Addierern 40, 41; 42, 43 sind mit den beiden Eingängen eines fünften und sechsten Addierers 44, 45 verbunden, an deren Ausgänge ein siebenter Addierer 46 angeschlossen ist. Der Ausgang des siebenten Addierers 46 ist mit einer Rundungsstufe 47 verbunden, deren Ausgang mit 48 bezeichnet ist.

An diesen Ausgang schließt sich der Blockzwischenspeicher BZS an, der eingangsseitig über einen ersten elektronischen Umschalter 50 mit den Eingängen zweier Zwischenspeicher ZS1 und ZS2 Verbunden ist. Die Ausgänge der beiden Zwischenspeicher stehen über einen zweiten Umschalter 51 mit einem Eingang 60 des zweiten eindimensionalen Transformators TR2 in Verbindung. Der zweite Transformator hat denselben Aufbau wie der erste Transformator TR1; das heißt er weist einen Serien-Parallelwandler 61, einen ersten bis achten Multiplizierer 62 bis 69, einen ersten bis vierten Addierer 70 bis 73, einen fünften und sechsten Addierer 74, 75 , einen siebenten Addierer 76, eine Rundungsstufe 77 auf, deren Ausgang den Ausgang 11 des zweiten Transformators TR2 bildet. Der Blockzwischenspeicher BZS wird durch die elektronische Speicher-und Steuerungsschaltung 31 angesteuert, wobei Signalspannungen an den Ausgängen 32, 33 die elektronischen Umschalter 50 und 51 steuern und die Signalspannungen an den Ausgängen 34 und 35 die Zwischenspeicher ZS1, ZS2. Die Signalspannungen an zwei weiteren Ausgängen 36 und 37 übernehmen die Steuerung der Serien-Parallelwandler 12, 61. Die Signalspannung an einem Ausgang 38 steuert die Multiplizierer 62 bis 69.

Die vorstehend beschriebene Schaltungsanordnung hat folgende Wirkungsweise.

Dem Eingang 10 der Schaltungsanordnung werden vorzugsweise seriell 64 digitale Eingangsgrößen $x_{i,j}$ ($i = 1 \dots 8$; $j = 1 \dots 8$) zugeführt, die durch die Schaltungsanordnung einer diskreten Cosinus-Transformation unterworfen werden sollen.

Von den 64 Eingangsgrößen stehen durch Serien-Parallelwandlung mit dem ersten Serien-Parallelwandler 12 zunächst die ersten acht Eingangsgrößen $x_{1,1} \dots x_{1,8}$ an den acht Ausgängen 13 bis 20 parallel und durch die Speicher-und Steuerungsschaltung 31 nach einem Algorithmus geordnet zur Verfügung, der sich aus der untenstehenden Transformationsmatrize ergibt. Diese Eingangsgrößen werden den ersten Eingängen der acht Multiplizierer 21 bis 28 zugeführt, in denen sie zunächst mit Faktoren c multipliziert werden, die sich aus der ersten Reihe einer für die diskrete Cosinus-Transformation spezifischen Transformationsmatrize A ergeben.

$$A = \begin{bmatrix}
c_1 & c_1 & c_1 & c_1 & c_1 & c_1 & c_1 & c_1 \\
c_2 & c_3 & c_4 & c_5 & -c_5 & -c_4 & -c_3 & -c_2 \\
c_6 & c_7 & -c_7 & -c_6 & -c_6 & -c_7 & c_7 & c_6 \\
c_3 & -c_5 & -c_2 & -c_4 & c_4 & c_2 & c_5 & -c_3 \\
c_1 & -c_1 & -c_1 & c_1 & c_1 & -c_1 & -c_1 & c_1 \\
c_4 & -c_2 & c_5 & c_3 & -c_3 & -c_5 & c_2 & -c_4 \\
c_7 & -c_6 & c_6 & -c_7 & -c_7 & c_6 & -c_6 & c_7 \\
c_5 & -c_4 & c_3 & -c_2 & c_2 & -c_3 & c_4 & -c_5
\end{bmatrix}$$

Die jeweils geltenden Faktoren c werden als von der elektronischen Speicher-und Steuerungsschaltung 31 an dem Ausgang 30 abgegebene Signalspannungen den Multiplizierern zugeführt. Die dann an den Ausgängen der acht Multiplizierer anstehenden Produkte werden paarweise entsprechend dem symmetrischen Aufbau der Transformationsmatrize A mittels der Addierer 40 bis 43 addiert. Die von den Addierern gelieferten Summen werden anschließend mittels der Addierer 44, 45 ebenfalls paarweise entsprechend der Transformationsmatrize A addiert. Die dadurch erhaltenen beiden Summen werden in dem Addierer 46 ebenfalls entsprechend der Transformationsmatrize A addiert, so daß sich am Ausgang des Addierers 46 nur noch eine Summe ergibt. Diese Summe wird auf acht bit entsprechend den je acht bit umfassenden Eingangsgrößen gerundet. Die Rundung erfolgt in einer Rundungsstufe 47. Die erste gerundete Summe, im folgenden als Zwischensumme $y'_{1,1}$ bezeichnet, wird in dem ersten Zwischenspeicher ZS1 abgespeichert, wobei die elektronischen Schalter 50, 51 die in der Figur gezeigten Schaltstellungen einnehmen. Nachfolgend werden, durch die Speicher-und Steuerungsschaltung 31 gesteuert, mit dem ersten Transformator TR1 sieben weitere Zwischensummen $y'_{1,2}$ bis $y'_{1,8}$ unter Berücksichtigung der Transformationsmatrize A gebildet und zeilenorientiert in dem ersten Zwischenspeicher ZS1 gespeichert. Durch die Speicher-und Steuerungsschaltung 31 werden danach aus den zweiten acht Eingangsgrößen des ersten Blocks Zwischensummen $y'_{2,1}$ bis $y'_{2,8}$ entsprechend der zweiten Zeile der Transformationsmatrize A gebildet und zeilenorientiert in dem ersten Zwischenspeicher ZS1 gespeichert. In analoger Weise folgt die Bildung der Zwischensummen $y'_{3,1}$ bis $y'_{8,8}$, die ebenfalls in dem ersten Zwischenspeicher ZS1 gespeichert werden. Erst wenn alle Zwischensummen $y'_{1,1}$ bis $y'_{8,8}$ in dem ersten Zwischenspeicher gespeichert sind, werden die zeilenweise eingespeicherten Zwischensummen mittels der Speicher-und Steuerungsschaltung 31 spaltenweise abgerufen, wobei vorher die Umschalter 50, 51 in eine von der in der Figur gezeigten Schaltstellung abweichende Schaltstellung übergeführt werden, in welcher der erste Umschalter 50 den Ausgang 49 mit dem Eingang des zweiten Zwischenspeichers ZS2 und der zweite Umschalter 51 den Ausgang des ersten Zwischenspeichers ZS1 mit dem Eingang 60 des zweiten Serien-Parallelwandlers 61 verbindet. Jede der acht Spalten umfaßt acht Werte, die nach Serien-Parallelwandlung mit dem zweiten Serien-Parallelwandler 61 des zweiten Transformators TR2 an dessen acht Ausgängen parallel anstehen. Es folgt dann der gleiche Rechenablauf wie bei dem ersten Transformator TR1, das heißt, es findet zunächst eine Multiplikation in den Multiplizierern 62 bis 69 entsprechend den aus der Transformationsmatrize A abgeleiteten Faktoren und danach eine paarweise Addition in den Addierern 70 bis 76 statt. Die Rundung erfolgt wie bei dem ersten Transformator mittels der Rundungsstufe 77. Am Ausgang 11 der Schaltungsanordnung zur diskreten Cosinus-Transformation erscheinen somit als Ergebnis der Transformation nacheinander je Block acht mal acht gleich 64 Gesamtsummen $y_{1,1}$ bis $y_{8,8}$.

Zeitlich parallel zu dem spaltenweisen Auslesen der in dem ersten Zwischenspeicher ZS1 abgespeicherten Zwischensummen und der Transformation in dem zweiten Transformator TR2 erfolgt in dem ersten Transformator TR1 bereits die Berechnung der Zwischensummen der acht mal acht Eingangsgrößen des zweiten Blocks. Diese Zwischensummen werden nach entsprechender Umschaltung des elektronischen Schalters 50 durch eine Signalspannung am Ausgang 32 der Speicher-und Steuerungsschaltung 31 zeilenorientiert in dem zweiten Zwischenspeicher ZS2 gespeichert. Auch hier müssen wieder erst alle Zwischensummen gespeichert sein, bevor das spaltenweise Auslesen und die eindimensionale Transformation mittels des zweiten Transformators TR2 beginnt. Somit kann unmittelbar nach dem Auftreten der letzten Gesamtsumme des ersten Blocks an dem Ausgang 11 die erste Gesamtsumme des zweiten Blocks abgegeben werden.

In einer alternativen Realisierung der diskreten Cosinus-Transformation werden die Multiplizierer 21 ... 28 und 62 ... 69 durch Look-up-tables ersetzt. In diesen sind alle vorkommenden Produkte gespeichert und durch entsprechende Adressierungen der Serien-Parallelwandler 12, 61 und der Speicher-und Steuerungsschaltung 31 abrufbar.

Eine mögliche Anwendung für die vorstehend beschriebene diskrete CosinusTransformation ist die blockweise Cosinus-Transformation der Helligkeitswerte von Bildpunkten, zum Beispiel eines Schwarz-Weiß-Fernsehbildes. In diesem Falle bilden jeweils acht Bildpunkte von acht aufeinanderfolgenden Zeilen einen Block. Wesentlich ist dabei, daß die Transformation möglichst schnell vonstatten geht, damit ein Echtzeit-Betrieb möglich ist. Es kommt also darauf an, daß die Transformation in vier bis sechs Mikrosekunden durchgeführt wird. Diese Forderung läßt sich mit dem angegebenen Verfahren realisieren.

**Ansprüche**

1. Verfahren zur zweidimensionalen diskreten Cosinus-Transformation einer Folge von Blöcken aus 8 mal 8 binären Daten, die je n bit umfassen, dadurch gekennzeichnet, daß zunächst die ersten acht an einem ersten eindimensionalen Transformator (TR1) parallel anstehenden Eingangsdaten mit je einem Faktor (c) multipliziert werden, der sich aus der ersten Reihe der Transformationsmatrize

$$A = \begin{bmatrix} c_1 & c_1 & c_1 & c_1 & c_1 & c_1 & c_1 & c_1 \\ c_2 & c_3 & c_4 & c_5 & {}^-c_5 & {}^-c_4 & {}^-c_3 & {}^-c_2 \\ c_6 & c_7 & {}^-c_7 & {}^-c_6 & {}^-c_6 & {}^-c_7 & c_7 & c_6 \\ c_3 & {}^-c_5 & {}^-c_2 & {}^-c_4 & c_4 & c_2 & c_5 & {}^-c_3 \\ c_1 & {}^-c_1 & {}^-c_1 & c_1 & c_1 & {}^-c_1 & {}^-c_1 & c_1 \\ c_4 & {}^-c_2 & c_5 & c_3 & {}^-c_3 & {}^-c_5 & c_2 & {}^-c_4 \\ c_7 & {}^-c_6 & c_6 & {}^-c_7 & {}^-c_7 & c_6 & {}^-c_6 & c_7 \\ c_5 & {}^-c_4 & c_3 & {}^-c_2 & c_2 & {}^-c_3 & c_4 & {}^-c_5 \end{bmatrix}$$

ergibt, daß die Produkte entsprechend der Symmetrie der Matrize paarweise addiert werden, daß die resultierenden Summen in der Folge entsprechend der Symmetrie der Matrize ebenfalls paarweise addiert werden, bis sich eine erste auf n bit gerundete Zwischensumme ($y'_{1,1}$) ergibt, die in einem ersten Zwi-

4

schenspeicher (ZS1) eines zwei Zwischenspeicher umfassenden Blockzwischenspeichers (BZS) gespeichert wird, daß in der Folge dieselben acht Eingangsdaten entsprechend der Transformationsmatrize (A) mit den Faktoren der Zeilen 2 bis 8 multipliziert und paarweise summiert werden, daß die sich dabei ergebenden Zwischensummen ($y'_{1,2}$ ... $y'_{1,8}$) nach Rundung auf jeweils n bit zeilenorientiert in den ersten Zwischenspeicher (ZS1) eingelesen werden usw., bis alle Zwischensummen ($y'_{1,1}$ ... $y'_{8,8}$) des ersten Blocks in dem ersten Zwischenspeicher gespeichert sind, daß die Zwischensummen ($y'_{1,1}$ ... $y'_{8,8}$) nach dem Algorithmus der Cosinus-Transformation spaltenweise ausgelesen und einem zweiten eindimensionalen Transformator (TR2) zugeführt werden, in dem sie nach dem gleichen Rechenschema wie in dem ersten eindimensionalen Transformator (TR1) bearbeitet werden, daß die transformierten Ausgangsdaten am Ausgang des zweiten Transformators zur Verfügung stehen und daß während des Auslesens der Zwischensummen des 1., 3., 5. ... Blocks aus dem ersten Zwischenspeicher die in analoger Weise berechneten Zwischensummen des 2., 4., 6. ... Blocks nacheinander in den zweiten Zwischenspeicher (ZS2) eingelesen werden.

2. Schaltungsanordnung zur Durchführung des Verfahrens nach Anspruch 1, dadurch gekennzeichnet, daß für die Durchführung der Rechenvorgänge mehrere miteinander verbundene integrierte Logikschaltungen vorgesehen sind.

3. Schaltungsanordnung nach Anspruch 2, dadurch gekennzeichnet, daß die integrierten Logikschaltungen zu einer VLSI-Schaltung zusammengefaßt sind.

4. Schaltungsanordnung nach Anspruch 2, dadurch gekennzeichnet, daß alle vorkommenden Produkte in Look-up-tables gespeichert sind, die die Multiplizierer (21 ... 28; 62 ... 69) ersetzen.